# EUROPÄISCHE PATENTSCHRIFT

(11) **EP 1 281 484 B1**
(45) Veröffentlichungstag und Bekanntmachung des Hinweises auf die Patenterteilung: **05.11.2008**
(21) Anmeldenummer: 02405617.8
(22) Anmeldetag: 18.07.2002
(51) Int. Cl.: B25D 16/00, H02K 7/08, H02K 7/116, H02K 7/14

(54) **Schlagendes Elektrohandwerkzeuggerät**
Electrical percussion Tool
Outil électrique à percussion

(30) Priorität: 30.07.2001 DE 10137157
(43) Veröffentlichungstag der Anmeldung: 05.02.2003
(73) Patentinhaber: HILTI Aktiengesellschaft, 9494 Schaan (LI)
(72) Erfinder: Artmann, Konrad, 86938 Schondorf (DE); Augustin, Johann, 81739 München (DE); Mayr, Martin, 85304 Ilmmünster (DE); Richter, Martin, 85354 Freising (DE)
(74) Vertreter: Wildi, Roland

(56) Entgegenhaltungen:
- EP-A- 0 104 154
- EP-A- 0 107 628
- EP-A- 0 107 629
- EP-A- 0 764 502
- DE-A- 4 312 328
- DE-A- 19 532 976
- FR-A- 887 542
- US-A- 6 123 158
- SHARPE CARILL: "Kempe's Engineers Year Book 1988 (93rd edition)" 1988 , MORGAN-GRAMPIAN BOOK PUBLISHING CO TD , LONDON XP002217918 * Seite G4-20, Zeile 21 - Seite G4-21, Zeile 10 * * Seite G4-20; Abbildung 24 *

## Beschreibung

Die Erfindung bezeichnet ein zumindest teilweise drehendes und schlagendes Elektrowerkzeuggerät, wie einen Bohrhammer oder Bohrmeissel, insbesondere für den Bergbau.

Schwere, vor Ort punktuell unterstützte, Bohrhämmer mit einer Masse über 10 kg, wie sie üblicherweise im Untertagebergbau zum Antrieb für Bohrwerkzeuge mit langen Bohrstangen und Bohrköpfen von 20 mm bis 50 mm Durchmesser zum Einbringen von Sprenglöchern verwendet werden, sind üblicherweise pneumatisch angetrieben, um eine Explosionsgefahr durch elektrische Funken auszuschliessen. Pneumatische Antriebe sind jedoch sehr sperrig und verursachen auf Grund des Strömungswiderstands in den langen Druckluftleitungen hohe Energieverluste.

Nach der DE1060033 weist eine Handbohrmaschine für den Bergbau einen bürstenlosen Elektromotor (Asynchronmotor mit einer Charakteristik nach Art eines Motors mit Mehrstabläufer) als Antrieb auf. Netzfrequenzbetriebene bürstenlose Elektromotoren weisen ein vergleichsweise hohes Gewicht auf. Üblicherweise wird bei schlagenden Elektrowerkzeuggeräten der schwere Elektromotor anseitig an der Rotorwelle gelagert, welche abtriebsseitig auskragt und somit stark wechselbelastet wird.

Nach der US5235259 wird ein elektronisch kommutierter Elektromotor zum Antrieb einer Bohrstange, nach der DE3417228 allgemein zum Kraftantrieb im Untertagebergbau eingesetzt.

Nach der EP107628 ist bei einem Bohrhammer mit einem pneumatischen Schlagwerk der senkrecht zur Schlagrichtung angeordnete elektronisch kommutierte Elektromotor mit einem topfförmigen Aussenläufer ausgebildet, welcher endseitig an einer auskragend einpunktgelagerten Rotorwelle befestigt ist, die Bestandteil der Getriebebaugruppe ist. Der grossvolumige, topfförmige Aussenläufer des Elektromotors muss nach der Montage des Stators separat auf der Rotorwelle montiert werden. Der endseitig auskragend angeordnete Exzenter führt zudem zu einer hohen Wechselbeanspruchung der Rotorwelle.

Nach der EP107629 weist ein modular aufgebauter Bohrhammer mit einem pneumatischen Schlagwerk einen bürstenlosen, über einen Wechselrichter elektronisch kommutierten, Elektromotor auf, wobei der gesamte Elektromotor Bestandteil einer Motorbaugruppe ist und der längs der Schlagachse einseitig auskragend gelagerte Rotor nach der Montage der Module mit einem auskragenden Antriebsritzel in die Getriebebaugruppe eingreift. Somit ist die Getriebebaugruppe als solche nicht gegen Schmiermittelaustritt zur Motorbaugruppe abdichtbar. Das endseitig auskragend angeordnete Antriebsritzel führt zudem zu einer hohen Wechselbeanspruchung der Rotorwelle.

Die Aufgabe der Erfindung besteht in der Realisierung eines modular montierbaren, hochbelastbaren schlagenden Elektrowerkzeuggerätes langer Lebensdauer.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein zumindest teilweise drehendes und schlagendes Elektrowerkzeuggerät ein pneumatisches Schlagwerk auf, welches von einem elektronisch kommutierten Elektromotor mit einem, Pole aufweisenden, inneren Rotor und einem äusseren, mit einem Wechselrichter einer Steuerelektronik verbundene Feldspulen aufweisenden, Stator über eine Getriebebaugruppe angetrieben wird, wobei die Rotorwelle abtriebsseitig in der Getriebebaugruppe gelagert und antriebsseitig mit den in den Stator eingreifenden, frei auskragenden Polen in den Stator koaxial einführbar ist.

Durch die Auftrennung des bürstenlosen Elektromotors in einen mit der Getriebebaugruppe vormontierbaren Rotor und einen mit der Motorbaugruppe vormontierbaren Stator ergibt sich eine technologisch einfache Vormontierbarkeit, wobei der Elektromotor erst bei der Endmontage der Getriebebaugruppe mit der Motorbaugruppe mittels koaxialen Einführens des Rotors in den Stator zweckentsprechend zusammengefügt wird. Die Getriebebaugruppe als solche ist bereits nach der Vormontage über die Rotorwelle gegen Schmiermittelaustritt zur Motorbaugruppe abgedichtet.

Vorteilhaft ist am antriebsseitigen Ende des Rotors drehfrei ein, ebenfalls koaxial in den Stator einführbarer, Magnetring befestigt, dessen Halterung Ausnehmungen bzw. Nasen aufweist, um in einer genau definierten Winkelposition drehformschlüssig in zugeordnete Nasen bzw. Ausnehmungen des Rotors einzugreifen. Der Magnetring ist das rotierende Teil eines mit der Steuerelektronik verbundenen Sensors zur Messung des Rotorwinkels.

Vorteilhaft ist die Getriebebaugruppe zum Antrieb des Schlagwerks, weiter vorteilhaft über einen Exzenter, in einem geschlossenen, weiter vorteilhaft aus einer Gehäuseschale und einem im wesentlichen flachen Gehäusedeckel bestehenden, Getriebegehäuse angeordnet, wodurch bereits zur Vormontage ein gegen Schmiermittelaustritt dicht geschlossenes Modul realisiert ist.

Vorteilhaft ist die Motorbaugruppe mit dem Stator in einem im wesentlichen mantelförmigen Motorgehäuse, welches mit dem Getriebegehäuse dicht gegen Kühlmittelaustritt verbindbar ist, anseitig einer Getriebegehäusewandung angeordnet, wodurch ein durch die Motorbaugruppe geleitetes Kühlmittel durch die gemeinsame Getriebegehäusewandung sowohl die Motorbaugruppe mit dem Stator als auch die Getriebebaugruppe kühlt.

Vorteilhaft ist eine Elektronikbaugruppe mit dem Wechselrichter in einem geschlossenen, weiter vorteilhaft aus einer Gehäuseschale und einem im wesentlichen flachen Gehäusedeckel bestehenden, Elektronikgehäuse, welches anseitig einer Elektronikgehäusewandung mit dem Motorgehäuse dicht gegen Kühlmittelaustritt verbindbar ist, angeordnet, wodurch ein durch die Motorbaugruppe geleitetes Kühlmittel durch die gemeinsame Elektronikgehäusewandung sowohl die Motorbaugruppe mit dem Stator als auch die Elektronikbaugruppe mit dem Wechselrichter und weiter vorteilhaft einen an der Elektronikgehäusewandung wärmeleitend anliegenden, einsteckbaren Zwischenkreiskondensator kühlt. Die Motorstecker zur Kontaktierung der Feldspulen des Stators zur Versorgung mit dem über das Sensorsignal geregelten Wechselstrom sind ebenfalls Teil der Elektronikgehäusewandung.

Vorteilhaft sind das Motorgehäuse sowie anseitig zu diesem die Getriebegehäusewandung und die Elektronikgehäusewandung mit einer Vielzahl von geometrisch einander zugeordneten Nuten und Kanälen für die Kühlmittelleitung versehen, welche nach der Endmontage der Getriebebaugruppe mit der Motorbaugruppe und der Elektronikbaugruppe ein kühlmitteldichtes, geeignet mäanderförmig durchströmbares Kühlsystem ausbilden, wodurch entsprechend der benötigten Kühlleistung insbesondere die Feldspulen, der Wechselrichter und der Zwischenkreiskondensator sowie in Fortsetzung des Kühlmittelflusses das Schlagwerk, gekühlt werden.

Die Erfindung wird bezüglich eines vorteilhaften Ausführungsbeispiels näher erläutert mit
Fig. 1 als Teilschnitt durch ein Elektrowerkzeuggerät.
Fig. 2 als teilweise Explosionsdarstellung

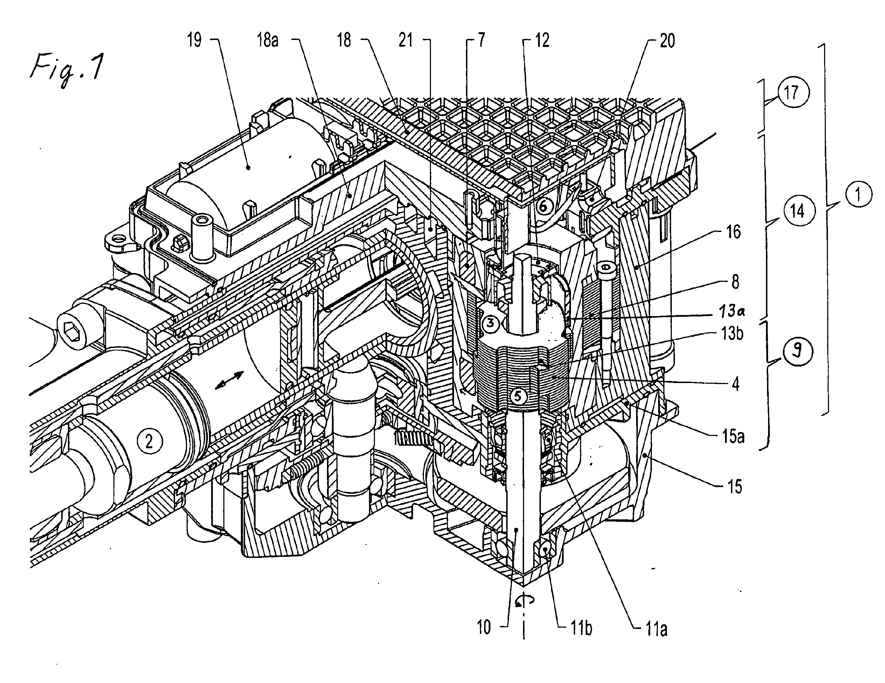

Nach Fig. 1 weist ein nur teilweise dargestelltes Elektrowerkzeuggerät 1 ein pneumatisches Schlagwerk 2 auf, welches von einem elektronisch kommutierten Elektromotor 3 mit einem, Pole 4 aufweisenden, inneren Rotor 5 und einem äusseren, mit einem Wechselrichter einer Steuerelektronik 6 verbundene Feldspulen 7 aufweisenden, Stator 8 über eine Getriebebaugruppe 9 angetrieben wird. Die Rotorwelle 10 ist abtriebsseitig in der Getriebebaugruppe 9 in zwei Kugellagern 11a, 11b gelagert und antriebsseitig mit den in den Stator 8 eingreifenden, frei auskragend Polen 4 in den Stator 8 koaxial eingeführt. Am antriebsseitigen Ende des Rotors 5 ist drehfrei ein, ebenfalls koaxial in den Stator 3 eingeführter, Magnetring 12 als das rotierende Teil eines mit der Steuerelektronik 6 verbundenen Sensors zur Messung des Rotorwinkels befestigt, welcher in seiner Halterung Nasen 13a aufweist, um in einer genau definierten Winkelposition drehformschlüssig in zugeordnete Ausnehmungen 13b des Rotors 5 einzugreifen. Die Getriebebaugruppe 9 ist in einem geschlossenen, aus einer Gehäuseschale und einem im wesentlichen flachen Gehäusedeckel bestehenden, Getriebegehäuse 15 angeordnet, aus welcher der Rotor 5 mit dem Magnetring 12 frei auskragt. Die Motorbaugruppe 14 mit dem Stator 8 in einem im wesentlichen mantelförmigen Motorgehäuse 16, welches mit dem Getriebegehäuse 15 dicht gegen Kühlmittelaustritt verbunden ist, ist anseitig einer Getriebegehäusewandung 15a angeordnet. Eine Elektronikbaugruppe 17 mit dem Wechselrichter der Steuerelektronik 6 ist in einem geschlossenen, aus einer Gehäuseschale und einem im wesentlichen flachen Gehäusedeckel bestehenden, Elektronikgehäuse 18 angeordnet, welches mit einer Elektronikgehäusewandung 18a anseitig mit dem Motorgehäuse 16 dicht gegen Kühlmittelaustritt verbunden ist, wobei an der Elektronikgehäusewandung 18a ein einsteckbarer Zwischenkreiskondensator 19 wärmeleitend anliegt. Die Motorstecker 20 zur Kontaktierung der Feldspulen 7 des Stators 8 zur stromleitenden Verbindung zum Wechselrichter der Steuerelektronik 6 sind Teil der Elektronikgehäusewandung 18a. Das Motorgehäuse 16 sowie anseitig zu diesem die Getriebegehäusewandung 15a und die Elektronikgehäusewandung 18a sind mit einer Vielzahl von geometrisch einander zugeordneten Nuten und Kanälen 21 für die Kühlmittelleitung versehen, welche ein kühlmitteldichtes, geeignet mäanderförmig durchströmbares Kühlsystem ausbilden.

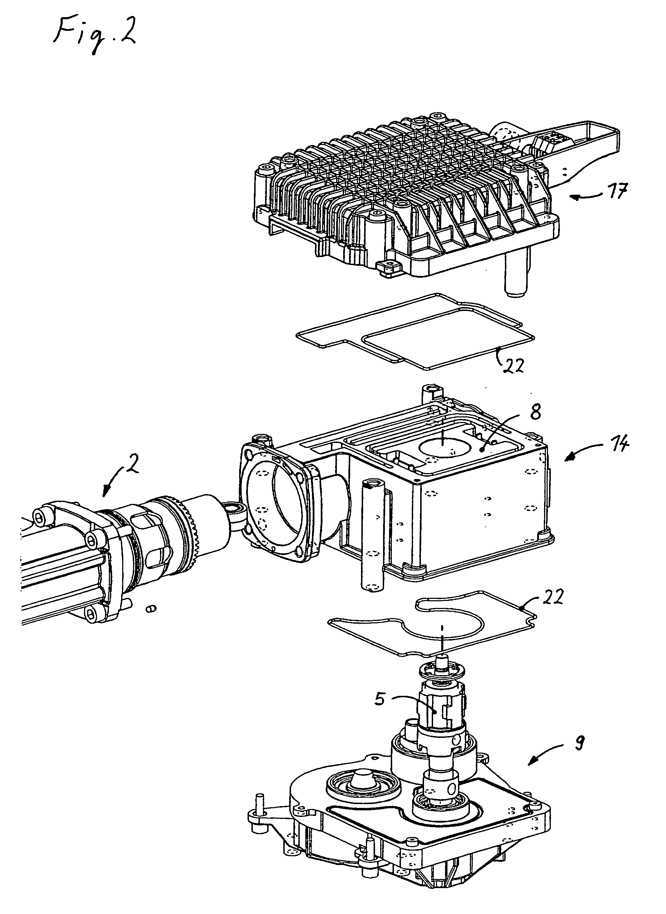

Nach Fig. 2 erfolgt die Endmontage der bereits zur Vormontage schmiermitteldicht geschlossenen Getriebebaugruppe 9 inklusive des Rotors 5 des Elektromotors 3 mit der Motorbaugruppe 14 inklusive des Stators 8 des Elektromotors 3 sowie der bereits zur Vormontage geschlossenen Elektronikbaugruppe 17 modular, wobei beidseitig der Motorbaugruppe 14 Dichtungen 22 zur kühlmitteldichten Abdichtung der sich dazwischen ausbildenden Kanäle 21 eingelegt werden.

## Patentansprüche

1. Elektrowerkzeuggerät zum zumindest teilweise drehenden und schlagenden Antrieb eines Werkzeugs mit einem pneumatischen Schlagwerk (2), welches von einem elektronisch kommutierten Elektromotor (3) mit einem, Pole (4) aufweisenden, inneren Rotor (5) und einem äusseren, mit einem Wechselrichter einer Steuerelektronik (6) verbundene Feldspulen (7) aufweisenden, Stator (8) über eine Getriebebaugruppe (9) angetrieben wird, **dadurch gekennzeichnet, dass** die Rotorwelle (10) abtriebsseitig in der Getriebebaugruppe (9) gelagert und antriebsseitig mit den in den Stator (8) eingreifenden, frei auskragenden Polen (4) in den Stator (8) koaxial einführbar ist.

2. Elektrowerkzeuggerät nach Anspruch 1, **dadurch gekennzeichnet, dass** am antriebsseitigen Ende des Rotors (5) drehfrei ein koaxial in den Stator (8) einführbarer Magnetring (12) befestigt ist, welcher mit seiner Halterung Ausnehmungen und/oder Nasen (13a) aufweist, die in einer definierten Winkelposition drehformschlüssig in den Rotor (5) eingreifbar sind.

3. Elektrowerkzeuggerät nach Anspruch 1 oder 2, **dadurch gekennzeichnet, dass** die Getriebebaugruppe (9) zum Antrieb des Schlagwerks (2) in einem geschlossenen, optional aus einer Gehäuseschale und einem im wesentlichen flachen Gehäusedeckel bestehenden, Getriebegehäuse (15) angeordnet ist.

4. Elektrowerkzeuggerät nach einem der vorherigen Ansprüche, **dadurch gekennzeichnet, dass** die Motorbaugruppe (14) mit dem Stator (8) in einem im wesentlichen mantelförmigen Motorgehäuse (16) anseitig einer Getriebegehäusewandung (15a) angeordnet ist.

5. Elektrowerkzeuggerät nach einem der vorherigen Ansprüche, **dadurch gekennzeichnet, dass** eine Elektronikbaugruppe (17) mit dem Wechselrichter der Steuerelektronik (6) in einem geschlossenen, optional aus einer Gehäuseschale und einem im wesentlichen flachen Gehäusedeckel bestehenden, Elektronikgehäuse (18) angeordnet ist.

6. Elektrowerkzeuggerät nach Anspruch 5, **dadurch gekennzeichnet, dass** die Motorbaugruppe (14) mit dem Stator (8) in einem im wesentlichen mantelförmigen Motorgehäuse (16) anseitig einer Elektronikbaugruppewandung (18a) angeordnet ist.

7. Elektrowerkzeuggerät nach Anspruch 6, **dadurch gekennzeichnet, dass** das Motorgehäuse (16) sowie anseitig zu diesem die Getriebegehäusewandung (15a) und die Elektronikgehäusewandung (18a) mit einer Vielzahl von geometrisch einander zugeordneten Nuten und Kanälen (21) für die Kühlmittelleitung versehen sind.

## Claims

1. An electric power tool with an at least partial rotary and percussion action for driving a working tool, said power tool having a pneumatic percussion mechanism (2) which is driven, via a gear assembly (9), by an electronically commutated electric motor (3) with an inner rotor (5) having poles (4) and an outer stator (8) having field coils (7) connected to an inverter of control electronics (6) **characterized in that** at the power take-off end the rotor shaft (10) is mounted in the gear assembly (9) and at the driving end said rotor shaft (10) with the freely protruding poles (4) engaging in the stator (8) can be inserted coaxially into the stator (8).

2. An electric power tool according to Claim 1, **characterized in that** a magnet ring (12), which can be inserted coaxially into the stator (8), is fixed at the driving end of the rotor (5) in such a way as to be free to rotate, said magnet ring (12) having a holding device with recesses and/or lugs (13a) capable of engaging in a specific angular position in the rotor (5) so as to be rotationally interlocked.

3. An electric power tool according to Claim 1 or 2, **characterized in that** the gear assembly (9) for driving the percussion mechanism (2) is located in a closed gear housing (15) optionally consisting of a housing shell and a substantially flat housing cover.

4. An electric power tool according to one of the preceding claims, **characterized in that** the motor assembly (14) with the stator (8) is located in a substantially jacket-type motor housing (16) adjacent to a wall (15a) of the gear housing (15).

5. An electric power tool according to one of the preceding claims, **characterized in that** an electronic assembly (17) with the inverter of the control electronics (6) is located in a closed electronics housing (18) optionally consisting of a housing shell and a substantially flat housing cover.

6. An electric power tool according to Claim 5, **characterized in that** the motor assembly (14) with the stator (8) is located in a substantially jacket-type motor housing (16) adjacent to a wall (18a) of the electronic assembly (17).

7. An electric power tool according to Claim 6, **characterized in that** the motor housing (16) as well as the adjacent wall (15a) of the gear housing (15) and the wall (18a) of the electronics housing (18) are provided with a plurality of grooves and channels (21) which are geometrically coordinated with one another and serve as coolant conduits.

## Revendications

1. Appareil électrique pour l'entraînement au moins partiellement en rotation et en percussion d'un outil, comprenant un mécanisme de percussion pneumatique (2) qui, par l'intermédiaire d'un ensemble de transmission (9), est entraîné par un moteur électrique à commutation électronique (3) muni d'un rotor intérieur (5) comportant des pôles (4) et d'un stator extérieur (8) comportant des bobines de champ (7) reliées à un onduleur d'une électronique de commande (6), **caractérisé en ce que** l'arbre de rotor (10), côté mené, est logé dans l'ensemble de transmission (9) et, côté menant, peut être introduit coaxialement dans le stator (8) à l'aide des pôles en libre saillie (4) s'engageant dans le stator (8).

2. Appareil électrique selon la revendication 1, **caractérisé en ce qu'**à l'extrémité côté menant du rotor (5) est fixé en libre rotation un anneau magnétique (12) qui peut être introduit coaxialement dans le stator (8) et qui, avec son moyen de support, comporte des évidements et/ou des reliefs (13a) aptes, dans une position angulaire définie, à s'engager dans le rotor (5) par complémentarité de formes en rotation.

3. Appareil électrique selon la revendication 1 ou 2, **caractérisé en ce que**, pour entraîner le mécanisme de percussion (2), l'ensemble de transmission (9) est disposé dans un carter de transmission fermé (15) optionnellement constitué d'une coque de carter et d'un couvercle de carter sensiblement plat.

4. Appareil électrique selon une des revendications précédentes, **caractérisé en ce que** l'ensemble moteur (14) avec le stator (8) est disposé dans un carter-moteur sensiblement en forme d'enveloppe (16) accolé à une paroi de carter de transmission (15a).

5. Appareil électrique selon une des revendications précédentes, **caractérisé en ce qu'**un ensemble électronique (17) avec l'onduleur de l'électronique de commande (6) est disposé dans un carter d'électronique fermé (18) optionnellement constitué d'une coque de carter et d'un couvercle de carter sensiblement plat.

6. Appareil électrique selon la revendication 5, **caractérisé en ce que** l'ensemble moteur (14) avec le stator (8) est disposé dans un carter-moteur sensiblement en forme d'enveloppe (16) accolé à une paroi d'ensemble électronique (18a).

7. Appareil électrique selon la revendication 6, **caractérisé en ce que** le carter-moteur (16) ainsi que, accolées à celui-ci, la paroi de carter de transmission (15a) et la paroi de carter d'électronique (18a) sont pourvue d'une pluralité de rainures et de canaux (21) associés géométriquement entre eux pour la circulation de réfrigérant.
